# EUROPEAN PATENT SPECIFICATION

(11) **EP 4 265 466 B1**
(45) Date of publication and mention of the grant of the patent: **12.08.2026**
(21) Application number: 23158603.3
(22) Date of filing: 24.02.2023
(51) Int. Cl.: B60L 15/20, B60L 3/00, B60L 7/08, B60L 7/18, B60L 7/26, B60L 15/10, B60L 15/30, B60L 15/36, B60L 15/38

(54) **TRAVEL CONTROLLING DEVICE OF ELECTRIC VEHICLE**
FAHRTSTEUERUNGSVORRICHTUNG EINES ELEKTROFAHRZEUGS
DISPOSITIF DE COMMANDE DE DÉPLACEMENT DE VÉHICULE ÉLECTRIQUE

(30) Priority: 15.04.2022 JP 2022067464
(43) Date of publication of application: 25.10.2023
(73) Proprietor: Suzuki Motor Corporation, Hamamatsu-shi, Shizuoka 432-8611 (JP)
(72) Inventor: SUZUKI, Hiroyasu, Hamamatsu-shi, Shizuoka, 432-8611 (JP)
(74) Representative: Haseltine Lake Kempner LLP

(56) References cited:
- CN-B- 108 284 771
- CN-B- 111 409 450
- KR-A- 20180 022 665
- US-A- 5 915 801
- US-B2- 10 421 362

## Description

### [Technical Field]

The present invention relates to a travel controlling device of an electric vehicle.

### [Background Art]

There is known from Patent Literature 1 a technique of generating, with an accelerator pedal released, a counter driving force (driving force in a regeneration direction) by a traction motor rotating in a reverse rotation direction opposite to a driving direction of the traction motor along which a vehicle is driven. According to the technique from Patent Literature 1, even without a brake operation, a vehicle is allowed to be stopped and maintained to be in the stopped state. Such a function is of adjusting, with only an operation to an accelerator pedal, an acceleration, a deceleration, and a stop of the vehicle, which may be called "one-pedal drive".

### [Citation List]

### [Patent Literature]

[Patent Literature 1] JP 2018-19559 A

A regenerative braking control method and system is known from US10421362.

A regenerative brake controller is known from US5915801.

### [Summary of Invention]

### [Technical Problem]

However, in the technique from Patent Literature 1, when a driver releases an accelerator pedal during vehicle travel with a certain speed or higher, the vehicle is caused to rapidly decelerate contrary to the driver's intention. Such a vehicle behavior is different from that in a general vehicle in which a coast travel with a gradual deceleration is performed with the accelerator pedal released and thus, may deteriorate an operability.

Thus, an object of the present invention is to provide a travel controlling device of an electric vehicle capable of preventing, when an accelerator opening decreases, a vehicle speed from rapidly decreasing contrary to a driver's intention to thereby allow a driver to drive the vehicle without deteriorating an operability.

### [Solution to Problem]

According to an aspect of the present invention, there is provided a travel controlling device of an electric vehicle as defined in claim 1.

### [Advantageous Effect of Invention]

According to the present invention, it is possible to prevent, when an accelerator opening decreases, a vehicle speed from rapidly decreasing contrary to a driver's intention to thereby allow a driver to drive the vehicle without deteriorating an operability.

### [Brief Description of Drawings]

Fig. 1 is a diagram showing an electric vehicle according to an embodiment of the present invention.
Fig. 2 is a flow chart showing procedures of an one-pedal drive switching operation to be performed by a travel controlling device of the electric vehicle.
Fig. 3 is a flow chart showing procedures of an one-pedal drive suspending condition determining process to be performed by the travel controlling device of the electric vehicle.
Fig. 4 is a time chart showing an example of a vehicle status transition when the one-pedal drive switching operation is performed by the travel controlling device of the electric vehicle.

### [Description of Embodiment]

electric vehicle.

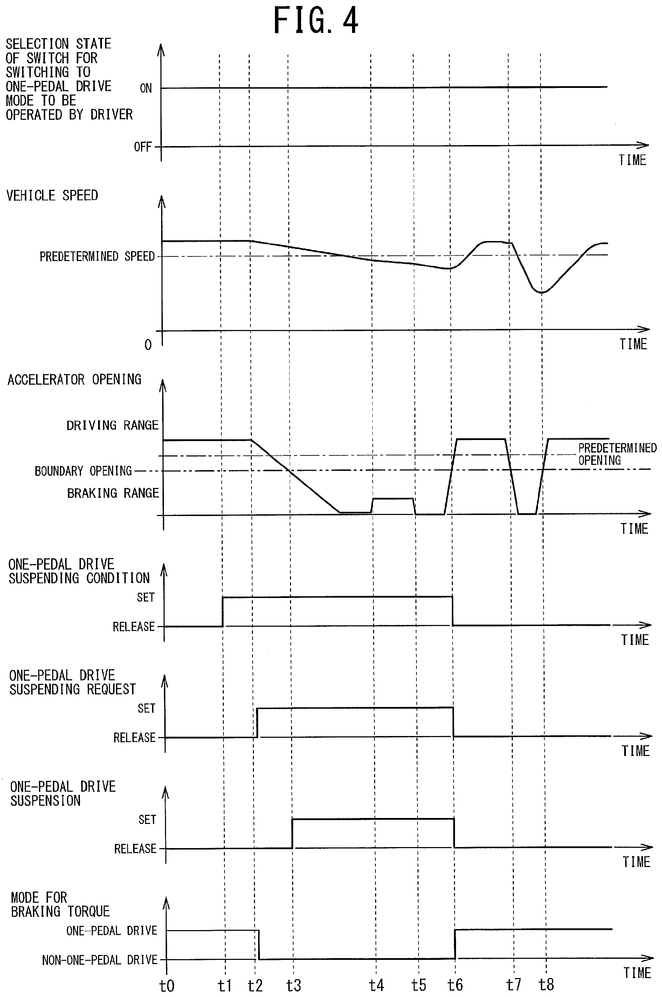

Fig. 4 is a time chart showing an example of a vehicle status transition when the one-pedal drive switching operation is performed by the travel controlling device of the electric vehicle.

### [Description of Embodiment]

A travel controlling device according to an embodiment of the present invention is mounted on an electric vehicle with a traction motor, the travel controlling device including: a control unit to cause the traction motor to generate, when an accelerator opening corresponding to an amount of an operation to an accelerator pedal decreases, a first braking torque with which a vehicle speed decreases at a first decrease rate, the control unit being configured to cause the traction motor to generate a second braking torque with which the vehicle speed decreases at a second decrease rate smaller than the first decrease rate, if the accelerator opening decreases, with the vehicle speed higher than a predetermined speed, at a change rate smaller than a predetermined rate.

### [Embodiment]

Hereinafter, referring to Figs., an electric vehicle mounted with a travel controlling device according to an embodiment of the present invention will be described in detail.

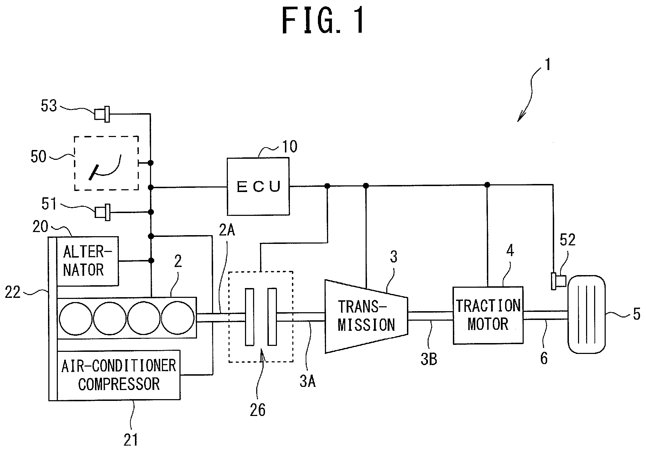

As shown in FIG. 1, the vehicle 1 includes an engine 2, a transmission 3, a clutch 26, a traction motor 4 for driving, driving wheels 5, an accelerator pedal 50, a brake pedal (not shown), and an ECU 10 (Electronic Control Unit) as a control unit to totally control the vehicle 1.

The engine 2 is formed with cylinders, being configured to perform, for each cylinder, a series of four steps of an intake step, a compression step, an expansion step and an exhaust step.

The engine 2 is connected with an alternator 20 and an air-conditioner compressor 21. Specifically, the alternator 20 and the air-conditioner compressor 21 are connected to a crankshaft 2A of the engine 2 via a belt 22, being configured to be operated with power from the engine 2. The alternator 20 is configured to generate AC power. The air-conditioner compressor 21 is configured to compress a refrigerant for an air conditioner.

The transmission 3 is configured to drive the driving wheels 5 via driving shafts 6 while changing a rotation speed inputted from the engine 2.

The clutch 26 is provided between the crankshaft 2A of the engine 2 and an input shaft 3A of the transmission 3. The clutch 26 is configured to be switched between an engagement state where power is transmitted between the engine 2 and the transmission 3, and a release state where no power is transmitted therebetween.

The traction motor 4 is provided between an output shaft 3B of the transmission 3 and the driving shafts 6. The traction motor 4 is configured to be driven with an electric power generated by the alternator 20 using power from the engine 2, or an electric power stored in a battery (not shown). The traction motor 4 is of a motor generator, also functioning as a generator to generate regeneration electric power with an energy by a deceleration of the vehicle 1.

The vehicle 1 includes a hybrid system where the vehicle 1 is allowed to travel with power from at least one of the engine 2 and the traction motor 4. In other words, the vehicle 1 is also an electric vehicle, being enabled to travel with motor torque of the traction motor 4.

The ECU 10 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the ECU 10, with various constants and maps.

That is, the CPU executes the program stored in the ROM using the RAM as an operation area, causing the computer unit to function as the ECU 10.

The input port of the ECU 10 is connected with various sensors such as an accelerator opening sensor 51, a vehicle speed sensor 52, and a switch 53. The accelerator opening sensor 51 is configured to detect, as an accelerator opening (e.g., of 0% with the accelerator pedal completely-released to 100% with the accelerator pedal completely-depressed), a depression amount of the accelerator pedal 50 (an amount of an operation thereto) and output the detection signal to the ECU 10. The vehicle speed sensor 52 is configured to detect, using rotation speed of the driving wheel 5 and the like, a speed of the vehicle 1 (hereinafter also referred to as vehicle speed) and output the detection signal to the ECU 10. The switch 53 is configured to detect a driver's operation thereto for switching an one-pedal driving mode between ON and OFF and output the detection signal to the ECU 10.

When the switch 53 is placed in an ON-state (the one-pedal drive mode is selected), the ECU 10 causes the traction motor 4 to generate an one-pedal drive braking torque (a first braking torque) with which the vehicle speed decreases at a first decrease rate, if the accelerator opening corresponding to the depression amount of the accelerator pedal 50 decreases. As such, the one-pedal drive braking torque is of a braking torque to be generated from the traction motor 4. Thus, the ECU 10 realizes a so-called one-pedal drive function of rapidly decelerating the vehicle 1 without operating the brake pedal (not shown).

Due to such an one-pedal drive function, the vehicle 1 is allowed to be accelerated/decelerated in accordance with only a driver's operation to the accelerator pedal 50 (hereinafter also referred to as accelerator pedal operation). Note that the ECU 10 may be configured to control the vehicle 1 to not only be decelerated with the one-pedal drive braking torque but also be stopped thereafter.

Even if the accelerator opening decreases, in a case where the vehicle speed is higher than a predetermined speed and a magnitude of a change rate of the accelerator opening (hereinafter simply also referred to as "change rate") is smaller than that of a predetermined rate, the ECU 10 causes the traction motor 4 to generate a non-one-pedal drive braking torque (second braking torque) with which the vehicle speed gradually decreases at a second decrease rate smaller than the first decrease rate. As such, the non-one-pedal drive braking torque is of a motor torque to realize a coast travel with a gradual deceleration as if an accelerator pedal is loosed in a general vehicle without such an one-pedal drive function.

Thus, in the vehicle 1 in the present embodiment, the vehicle speed decreases, similar to that in a case where a brake operation is performed, when the driver rapidly releases the accelerator pedal 50 and on the other hand, a coast travel is performed when the driver gradually releases the accelerator pedal 50 while the vehicle speed is higher than the predetermined speed. The respective first and second decrease rates, due to the one-pedal and non-one-pedal drive braking torques, are of values depending on a decrease amount of the accelerator opening and the like.

As shown in FIG. 4, the ECU 10 includes, as ranges of the accelerator opening, a driving range (first range) within which driving torque is generated in accordance with the accelerator opening, a braking range (second range) within which the accelerator opening is smaller than that within the driving range and a braking torque is generated in accordance with the accelerator opening. A boundary opening partitions between these ranges.

Due thereto, when the accelerator opening decreases within the driving range, the vehicle speed decreases as driving torque decreases, but when the accelerator opening decreases within the braking range, the vehicle 1 is decelerated with one of the one-pedal and non-one-pedal drive braking torques.

Specifically, when the accelerator opening decreases within the driving range, if the vehicle speed is higher than the predetermined speed and the change rate of the accelerator opening is smaller than the predetermined rate, the ECU 10 sets an one-pedal drive suspending condition (i.e., determines an one-pedal drive suspending condition to be established) while causing the traction motor 4 to generate driving torque in accordance with the accelerator opening.

Subsequently, with one-pedal drive suspending condition set, if the accelerator opening decreases to transit from the driving range to the braking range, the ECU 10 causes the traction motor 4 to generate the non-one-pedal drive braking torque.

Additionally, if, thereafter, the accelerator opening increases to transit from the braking range to the driving range, the ECU 10 releases (prohibits) the generation of the non-one-pedal drive braking torque by the traction motor 4.

On the other hand, when the accelerator opening within the driving range decreases at the change rate larger than the predetermined rate, due to release of the accelerator pedal 50, the ECU 10 causes the traction motor 4 to generate the one-pedal drive mode braking torque.

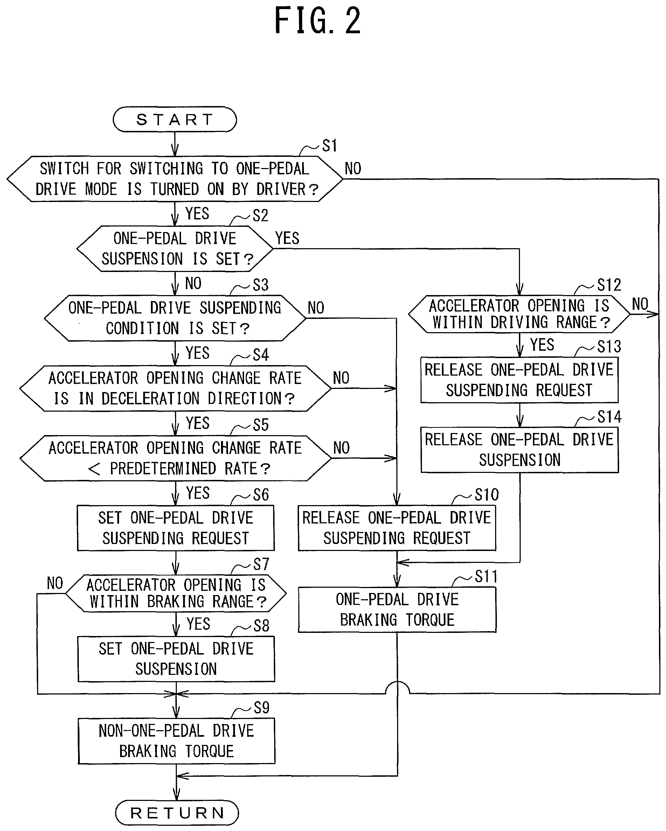

Next, referring to FIG. 2, the one-pedal drive switching operation to be performed by the travel controlling device will be explained. Note that the one-pedal drive switching operation is to be started upon start of the ECU 10, being repeated at a predetermined interval. Note that in explanations to be described later:
"one-pedal drive mode" means a mode for braking torque (i.e., a braking mode using the above-described one-pedal drive function) where the traction motor 4 is caused, with the accelerator opening being within the braking range, to generate a predetermined brake torque while the switch 53 is turned on by the driver to select the one-pedal drive mode;
"one-pedal drive suspension" means that the traction motor 4 is caused to exceptionally generate, without the one-pedal drive braking torque, the non-one-pedal drive braking torque even while the switch 53 is turned on by the driver to select the one-pedal drive mode;
"one-pedal drive suspending condition" is a precondition to allow the one-pedal drive suspension; and
"one-pedal drive suspending request" is a request for the one-pedal drive suspension.

At step S1, the ECU 10 determines whether the switch 53 (indicated with "SW" in FIGS.) for switching to the one-pedal drive mode is turned on (i.e., whether the one-pedal drive mode is selected by the driver).

If "YES" at step S1 (when determining that the switch 53 is turned on), the ECU 10 proceeds to step S2 to determine whether the one-pedal drive suspension is set.

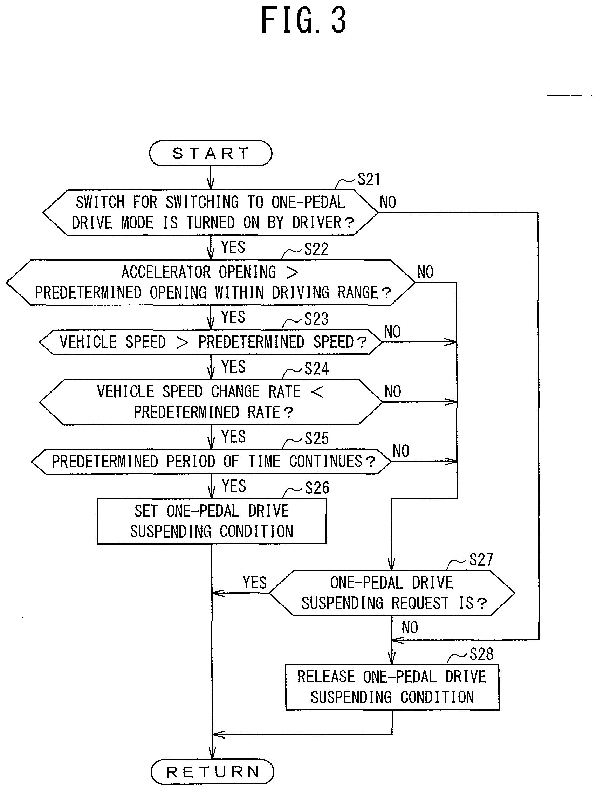

If "NO" at step S2 (when determining that the one-pedal drive suspension is not set), the ECU 10 proceeds to step S3 to determine whether the one-pedal drive suspending condition is set. At this step S3, the one-pedal drive suspending condition determining process to be described later is to be performed (see FIG. 3). Note that the phrases "one-pedal drive suspending condition is set/released" mean that one-pedal drive suspending condition is established/non-established.

If "YES" at step S3 (when determining that one-pedal drive suspending condition is set), the ECU 10 proceeds to step S4 to determine whether the accelerator opening decreases (e.g., whether sign of the change rate thereof indicates a deceleration direction (a direction along which the depressed accelerator pedal 50 is released)). Thereat, in a case where negative sign thereof corresponds to the deceleration direction, the ECU 10 determines whether the sign is negative, for example.

If "YES" at step S4 (when determining that the accelerator opening decreases), the ECU 10 proceeds to step S5 to determine whether the change rate of the accelerator opening is smaller than the predetermined rate (i.e., whether the accelerator opening relatively-gradually decreases).

If "YES" at step S5 (when determining that the change rate of the accelerator opening is smaller than the predetermined rate), the ECU 10 proceeds to step S6 to set the one-pedal drive suspending request.

At subsequent step S7, the ECU 10 determines whether the accelerator opening is within the braking range.

If "YES" at step S7 (when determining that the accelerator opening is within the braking range), the ECU 10 proceeds to step S8 to set the one-pedal drive suspension.

At subsequent step S9, the ECU 10 sets the non-one-pedal drive braking torque (i.e., causes, as braking torque, the non-one-pedal drive braking torque in accordance with the accelerator opening), thereafter terminating this process.

If "NO" at step S7 (when determining that the accelerator opening is not within the braking range), the ECU 10 proceeds to step S9 to set the non-one-pedal drive braking torque, thereafter terminating this process.

Meanwhile, if "NO" at step S3 (when determining that the one-pedal drive suspending condition is yet to be set), if "NO" at step S4 (when determining that the accelerator opening is yet to decrease), or if "NO" at step S5 (when determining that the change rate of the accelerator opening is yet to be smaller than the predetermined rate), the ECU 10 proceeds to step S10 to release the one-pedal drive suspending request.

At subsequent step S11, the ECU 10 sets the one-pedal drive braking torque (i.e., switches the mode for braking torque to the one-pedal drive mode), thereafter terminating this process.

On the other hand, if "YES" at step S2 (when determining that the one-pedal drive suspension is set), the ECU 10 proceeds to step S12 to determine whether the accelerator opening is within the driving range.

If "YES" at S12 (when determining that the accelerator opening is within the driving range), the ECU 10 proceeds to step S13 to release the one-pedal drive suspending request, subsequently releasing the one-pedal drive suspension at step S14.

Thereafter, proceeding to step S11, the ECU 10 sets the one-pedal drive braking torque (i.e., switches the mode for braking torque to the one-pedal drive mode), thereafter terminating this process.

By the way, if "NO" at step S1 (when determining that the switch 53 is yet to be turned on), or if "NO" at step S12 (when determining that the accelerator opening is yet to fall within the driving range), the ECU proceeds to step S9 to set the non-one-pedal drive braking torque (i.e., switches the mode for braking torque to a non-one-pedal drive mode of a normal braking mode).

Next, referring to FIG. 3, the one-pedal drive suspending condition determining process to be performed by the travel controlling device according to the present embodiment.

At step S21, the ECU 10 determines whether the switch 53 is turned on (i.e., whether the driver selects the one-pedal drive mode).

If "YES" at step S21 (when determining that the switch 53 is turned on), the ECU 10 proceeds to step S22 to determine whether the accelerator opening is larger than a predetermined opening within the driving range.

If "YES" at step S22 (when determining that the accelerator opening is larger than the predetermined opening within the driving range), the ECU 10 proceeds to step S23 to determine whether the vehicle speed is higher than the predetermined speed.

If "YES" at step S23 (when determining that the vehicle speed is higher than the predetermined speed), the ECU 10 proceeds to step S24 to determine whether a vehicle speed change rate is smaller than a predetermined rate.

If "YES" at step S24 (when determining that the vehicle speed change rate is smaller than the predetermined rate), the ECU 10 proceeds to step S25 to determine whether such states ("YES" at steps S22 to S24) as to the accelerator opening, the vehicle speed, and the vehicle speed change rate continues for a predetermined period of time (i.e., whether the predetermined period elapses while the accelerator opening/the vehicle speed/the vehicle speed change rate is larger/higher/smaller than the predetermined opening/the predetermined speed/the predetermined rate).

If "YES" at step S25 (when determining that the predetermined period elapses with such an accelerator opening), a vehicle speed, and a vehicle speed change rate, the ECU 10 proceeds to step S26 to set the one-pedal drive suspending condition, thereafter terminating this process.

On the other hand, if "NO" at step S22 (when determining that the accelerator opening is not larger than the predetermined opening within the driving range), if "NO" at step S23 (when determining that the vehicle speed is not higher than the predetermined speed), if "NO" at step S24 (when determining that the vehicle speed change rate is not larger than the predetermined rate), or if "NO" at step S25 (when determining that the predetermined period does not elapse), the ECU 10 proceeds to step S27 to determine whether the one-pedal drive suspending request is set.

If "YES" at step S27 (when determining that the one-pedal drive suspending request is set), the ECU 10 terminates this process.

If "NO" at step S27 (when determining that the one-pedal drive suspending request is not set), or if "NO" at step S21 (when determining that the switch 53 is not turned on), the ECU 10 proceeds to step S28 to release the one-pedal drive suspending condition, thereafter terminating this process.

Next, referring to FIG. 4, there will be explained an example of a vehicle status transition when the one-pedal drive switching operation is performed. In FIG. 4, vertical axes indicate, in order from above, a selection state of the switch 53 for switching to the one-pedal drive mode to be operated by the driver, a vehicle speed, an accelerator opening, a set/release for the one-pedal drive suspending condition, a set/release for the one-pedal drive suspending request, a set/release for the one-pedal drive suspension, and a mode for braking torque and on the other hand, horizontal axes indicate respective times. Note that in FIG. 4, from time t0, the switch 53 is maintained in an ON-state to select the one-pedal drive mode by the driver.

From time t0 to time t1, the accelerator opening is maintained to be constant within the driving range, by which the vehicle 1 travels with constant speed. At time t0, the one-pedal drive suspending condition, the one-pedal drive suspending request, and the one-pedal drive suspension are each released. In addition, the braking torque is controlled in accordance with the one-pedal drive mode.

At time t1, the one pedal drive suspending condition is set. This is because, the predetermined period elapses with the accelerator opening larger than the predetermined opening within the driving range, the vehicle speed higher than the predetermined speed, and the vehicle speed change rate smaller than the predetermined rate.

Thereafter, at time t2, the accelerator opening begins to gradually decrease. Immediately thereafter, with the one-pedal drive suspending condition set, the one-pedal drive suspending request is set since the accelerator opening decreases with the change rate thereof smaller than the predetermined rate. At this time, there is the one-pedal drive suspending request during establishment of the one-pedal drive suspending condition and thus, the mode for the braking torque is switched from the one-pedal drive mode to the non-one-pedal drive mode.

Thereafter, at time t3, the one-pedal drive suspension is set (started). This is because, the accelerator opening drops to fall within the braking range. Subsequently, the accelerator opening continues to drop, reaching zero (being placed in a state where the accelerator pedal 50 is completely-released) after time t3.

Thereafter, at time t4, the accelerator opening increases within the braking range. At this time, the accelerator opening falls within the braking range and thus, the vehicle speed continues to decrease.

Thereafter, at time t5, the accelerator pedal 50 is released again, decreasing the accelerator opening to zero.

Thereafter, at time t6, the accelerator opening increases to fall within the driving range. Thereby, the one-pedal drive suspending request, the one-pedal drive suspension, and the one-pedal drive suspending condition are each released. Then, the mode for braking torque is switched from the non-one-pedal drive mode to the one-pedal drive mode.

Thereafter, at time t7, the accelerator opening rapidly decreases to the braking range. At this time, the change rate thereof is larger than the predetermined rate and thus, the mode for braking torque is maintained as the one-pedal drive mode to thereby decelerate the vehicle as if the brake pedal is operated. After time t7, the vehicle speed decreases below the predetermined speed.

Thereafter, at time t8, the accelerator opening increases to fall within the driving range, increasing the vehicle speed.

Thus, in the present embodiment, when the accelerator opening corresponding to the depression amount of the accelerator pedal 50 decreases, the ECU 10 causes the traction motor 4 to generate the one-pedal drive braking torque with which the vehicle speed decreases at the first decrease rate. At this time, if the vehicle speed is higher than the predetermined speed and the change rate of the accelerator opening is smaller than the predetermined rate, the ECU 10 causes the traction motor 4 to generate, instead of the one-pedal drive braking torque, the non-one-pedal drive braking torque with which the vehicle speed decreases at the second decrease rate smaller than the first decrease rate.

Thereby, when the vehicle 1 travels at a relatively-low speed or the accelerator pedal 50 is quickly released, braking torque is generated so that the vehicle speed decreases at the first decrease rate (i.e., relatively-rapid deceleration), allowing the driver to adjust the vehicle speed by operating only the accelerator pedal without operating the brake pedal.

On the other hand, during e.g., coast travel with the vehicle speed higher than the predetermined speed, when the depressed accelerator pedal 50 is gradually released, braking torque is generated so that the vehicle speed decreases at the second decrease rate (i.e., relatively-gradual deceleration), allowing the driver to drive, in the one-pedal drive mode, the vehicle 1 in coast travel even with the accelerator pedal 50 released.

Accordingly, it is possible to prevent, when the accelerator opening decreases, the vehicle speed from rapidly decreasing contrary to the driver's intention, allowing the driver to drive the vehicle 1 without deteriorating an operability.

Additionally, in the present embodiment, the ECU 10 includes, as ranges of the accelerator opening, the driving range, within which driving torque is generated in accordance with the accelerator opening, and the braking range with the smaller accelerator opening than the driving range, within which braking torque is generated. If the accelerator opening falls within the driving range, even while the accelerator opening decreases, driving torque is generated in accordance with the accelerator opening. On the other hand, if the accelerator opening falls within the braking range (e.g., when the accelerator opening increases to the driving range and thereafter decreases to the braking range), braking torques in the one-pedal drive mode and the non-one-pedal drive mode are selectively generated.

When the accelerator opening decreases within the driving range, if the vehicle speed is higher than the predetermined speed and the change rate of the accelerator opening is smaller than the predetermined rate, the ECU 10 places the mode for braking torque in the non-one-pedal drive mode while causing the traction motor 4 to generate driving torque in accordance with the accelerator opening.

Subsequently, when the accelerator opening further decreases to transit from the driving range to the braking range, the ECU 10 causes the traction motor 4 to generate the non-one-pedal drive braking torque.

Thereby, for example, when, during coast travel, the accelerator opening decreases to fall within the braking range, braking torque is generated in the non-one-pedal drive mode, allowing the vehicle 1 to continue coast travel even if the depressed accelerator pedal 50 is released during the one-pedal drive mode. Thus, when the driver releases the depressed accelerator pedal 50 while intending to continue coast travel, it is possible to prevent a rapid decrease of the vehicle speed contrary to the driver's intention, thereby allowing the driver to drive the vehicle 1 without deteriorating an operability. Note that when requesting the vehicle 1 to be rapidly decelerated during such a coast travel, the driver may depress the brake pedal.

In this case, if the accelerator opening subsequently increases to transit from the braking range to the driving range, the ECU 10 releases (prohibits) the generation of non-one-pedal drive braking torque by the traction motor 4.

Thereby, when the driver depresses the accelerator pedal 50 in order to accelerate the vehicle 1, braking torque is released, allowing the driver to drive the vehicle 1 without deteriorating the operability.

On the other hand, when the accelerator pedal 50 is released to thereby decrease, at the change rate larger than the predetermined rate, the accelerator opening from the driving range to the braking range, the ECU 10 causes the traction motor 4 to generate the one-pedal drive braking torque.

Thereby, when the accelerator pedal 50 is rapidly released to transit from the driving range to the braking range, the one-pedal drive braking torque is generated to thereby decrease the vehicle speed. Thus, the driver is allowed to drive the vehicle 1 while switching, by adjusting a speed of a release operation to the accelerator pedal 50, between the one-pedal drive braking torque with which the vehicle speed decreases as if the brake pedal is operated, and the non-one-pedal drive braking torque for coast travel of the vehicle 1. Due thereto, the driver is allowed to drive the vehicle 1 without deteriorating an operability.

### [Reference Signs List]

1: vehicle (electric vehicle)
4: traction motor
10: ECU (control unit)
50: accelerator pedal

## Claims

1. A travel controlling device of an electric vehicle (1) with a traction motor (4), comprising:
a control unit (10) to, when an accelerator opening corresponding to an amount of an operation to an accelerator pedal (50) decreases, control the traction motor (4) in a one-pedal drive mode where the traction motor (4) is caused to generate a first braking torque with which a vehicle speed decreases at a first decrease rate, wherein
as ranges of the accelerator opening, the control unit (10) includes:
a first range within which a driving torque is generated in accordance with the accelerator opening; and
a second range with the smaller accelerator opening than the first range, within which a braking torque is generated in accordance with the accelerator opening, and
the control unit (10) is **characterized by** being configured to:
set an one-pedal drive suspending condition, if the accelerator opening decreases within the first range, with the vehicle speed being higher than a predetermined speed; and
cause the traction motor (4) to generate a second braking torque with which the vehicle speed decreases at a second decrease rate smaller than the first decrease rate, if the accelerator opening decreases at a change rate smaller than a predetermined rate to transit from the first range to the second range, with the one-pedal drive suspending condition being set.

2. The travel controlling device as claimed in claim 1, wherein
upon increasing the decreased accelerator opening to transit from the second range to the first range, the control unit (10) causes the traction motor (4) to stop generating the second braking torque.

3. The travel controlling device as claimed in claim 1 or 2, wherein
if the accelerator opening decreases at the predetermined rate or larger to transit from the first range to the second range, the control unit (10) causes the traction motor (4) to generate the first braking torque.

## Patentansprüche

1. Fahrsteuerungsvorrichtung eines Elektrofahrzeugs (1) mit einem Traktionsmotor (4), umfassend:
eine Steuereinheit (10), um, wenn eine Gaspedalöffnung, die einem Ausmaß einer Betätigung eines Gaspedals (50) entspricht, abnimmt, den Traktionsmotor (4) in einem Ein-Pedal-Antriebsmodus zu steuern, in dem der Traktionsmotor (4) veranlasst wird, ein erstes Bremsmoment zu erzeugen, mit dem eine Fahrzeuggeschwindigkeit mit einer ersten Abnahmerate abnimmt, wobei
die Steuereinheit (10) als Bereiche der Gaspedalöffnung Folgendes beinhaltet:
einen ersten Bereich, innerhalb dessen ein Antriebsmoment gemäß der Gaspedalöffnung erzeugt wird; und
einen zweiten Bereich mit der kleineren Gaspedalöffnung als der erste Bereich, innerhalb dessen ein Bremsmoment gemäß der Gaspedalöffnung erzeugt wird, und
wobei die Steuereinheit (10) **dadurch gekennzeichnet ist, dass** sie zu Folgendem konfiguriert ist:
Festlegen einer Ein-Pedal-Antriebsaufhängungsbedingung, wenn die Gaspedalöffnung innerhalb des ersten Bereichs abnimmt, während die Fahrzeuggeschwindigkeit höher als eine vorbestimmte Geschwindigkeit ist; und
Veranlassen des Traktionsmotors (4), ein zweites Bremsmoment zu erzeugen, mit dem die Fahrzeuggeschwindigkeit mit einer zweiten Abnahmerate, die kleiner als die erste Abnahmerate ist, abnimmt, wenn die Gaspedalöffnung mit einer Änderungsrate, die kleiner ist als eine vorbestimmte Rate, abnimmt, um von dem ersten Bereich in den zweiten Bereich zu wechseln, wobei die Ein-Pedal-Antriebsaufhängungsbedingung festgelegt ist.

2. Fahrsteuerungsvorrichtung nach Anspruch 1, wobei beim Erhöhen der verringerten Gaspedalöffnung, um von dem zweiten Bereich in den ersten Bereich zu wechseln, die Steuereinheit (10) den Traktionsmotor (4) veranlasst, aufzuhören, das zweite Bremsmoment zu erzeugen.

3. Fahrsteuerungsvorrichtung nach Anspruch 1 oder 2, wobei, wenn die Gaspedalöffnung mit der vorbestimmten Rate oder mehr abnimmt, um von dem ersten Bereich in den zweiten Bereich zu wechseln, die Steuereinheit (10) den Traktionsmotor (4) veranlasst, das erste Bremsmoment zu erzeugen.

## Revendications

1. Dispositif de commande de déplacement d'un véhicule électrique (1) avec un moteur de traction (4), comprenant :
une unité de commande (10) qui, lorsqu'une ouverture d'accélérateur correspondant à une amplitude d'une opération sur une pédale d'accélérateur (50) diminue, commande le moteur de traction (4) en mode de conduite à une pédale, où le moteur de traction (4) est amené à générer un premier couple de freinage avec lequel une vitesse de véhicule diminue à un premier taux de diminution, dans lequel
en guise de plages de l'ouverture d'accélérateur, l'unité de commande (10) comporte :
une première plage au sein de laquelle un couple d'entraînement est généré conformément à l'ouverture d'accélérateur ; et
une seconde plage avec l'ouverture d'accélérateur plus faible que la première plage, au sein de laquelle un couple de freinage est généré conformément à l'ouverture d'accélérateur, et
l'unité de commande (10) est caractérisée en étant configurée pour :
définir une condition de suspension de conduite à une pédale si l'ouverture d'accélérateur diminue au sein de la première plage, la vitesse du véhicule étant supérieure à une vitesse prédéterminée ; et
amener le moteur de traction (4) à générer un second couple de freinage avec lequel la vitesse de véhicule diminue à un second taux de diminution inférieur au premier taux de diminution, si l'ouverture d'accélérateur diminue à un taux de variation inférieur à un taux prédéterminé pour passer de la première plage à la seconde plage, la condition de suspension de conduite à une pédale étant définie.

2. Dispositif de commande de déplacement selon la revendication 1, dans lequel
lors de l'augmentation de l'ouverture d'accélérateur diminuée pour passer de la seconde plage à la première plage, l'unité de commande (10) amène le moteur de traction (4) à cesser de générer le second couple de freinage.

3. Dispositif de commande de déplacement selon la revendication 1 ou 2, dans lequel
si l'ouverture d'accélérateur diminue au taux prédéterminé ou supérieur pour passer de la première plage à la seconde plage, l'unité de commande (10) amène le moteur de traction (4) à générer le premier couple de freinage.
